# EUROPEAN PATENT APPLICATION

(11) **EP 4 793 805 A1**
(43) Date of publication of application: **19.08.2026**
(21) Application number: 25157701.1
(22) Date of filing: 13.02.2025
(51) Int. Cl.: G06F 21/57, G06F 21/64

(54) **COMPUTER-IMPLEMENTED METHOD FOR EVALUATING AN INTEGRITY OF AN AUTOMATION SYSTEM**

(71) Applicant: Siemens Aktiengesellschaft, 80333 München (DE)
(72) Inventor: Fröhlich, Joachim, 85614 Kirchseeon (DE); Rothbauer, Stefan, 86156 Augsburg (DE); Stückjürgen, Christoph, 80807 München (DE); Telschig, Kilian, 81543 München (DE)
(74) Representative: Siemens Patent Attorneys

(57) **Abstract**

The invention relates to a computer-implemented method for evaluating an integrity of an automation system (1) for automating a machine (8). The method comprises providing a first compute node (2), which comprises a first automation module (4) for generating a first automation signal (11) and a second data probe (7). Additionally, providing a second compute node (3), which comprises a second automation module (6) for generating a second automation signal (12) and a first data probe (5). The first data probe (5) and the second data probe (7) are configured according to a publish-subscribe pattern (9). Furthermore, carrying out a first challenge-response program (10) by communication via the publish-subscribe pattern (9) by the first data probe (5) and the second data probe (7). In addition, evaluating the integrity of the automation system (1) depending on a result (23) of the first challenge-response program (10).

## Description

The invention relates to a computer-implemented method for evaluating an integrity of an automation system for automating a machine. Additionally the invention relates to two computer-implemented methods for evaluating a continued integrity of an automation system for automating a machine. Furthermore, the invention relates to an automation system for automating a machine and a computer program product.

System safety functions, which are realized in software within an automation system, need a sufficiently safe execution environment that ensures a safety of an application even in the presence of a software and/or hardware failure. Depending on a safety classification of the application, certain classes of failures need to be detected and mitigated in a timely manner, so that a single failure does not lead to an unsafe condition of the application. Therefore in many cases, safety certified platforms are used.

Certified platforms are usually expensive and impose specific conditions on an automation module and a runtime environment.

Current solutions that use point-to-point and/or synchronous messaging limit the solutions to specific, strongly coupled automation systems or platforms.

It is an objective of the present invention to enhance and/or accelerate an evaluation of an integrity of an automation system comprising a first compute node and a second compute node.

This objective is achieved by the subject matter of the independent claim. Further implementations and preferred embodiments are subject matter of the dependent claims.

The invention is based on the idea to provide a first compute node and a second compute node, wherein each of the first compute node and the second compute node comprise a respective data probe, to carry out a challenge-response program by communication via a publish-subscribe pattern and to evaluate the integrity of the automation system depending on a result of the challenge-response program.

According to an aspect of the invention a computer-implemented method for evaluating an integrity of an automation system for automating a machine is provided. The method comprises providing a first compute node of the automation system, wherein the first compute node comprises a first automation module for generating a first automation signal for automating the machine and a second data probe. Additionally, the method comprises providing a second compute node of the automation system, wherein the second compute node comprises a second automation module for generating a second automation signal for automating the machine and a first data probe. Therein, the first data probe and the second data probe are configured to communicate by publishing and receiving data according to a publish-subscribe pattern. Furthermore, the method comprises carrying out a first challenge-response program by communication via the publish-subscribe pattern, wherein the second data probe acts as a first challenging instance according to the first challenge-response program, and the first data probe acts as a first responding instance according to the first challenge-response program. Additionally the method comprises evaluating, in particular by the first compute node, the integrity of the automation system depending on a result of the first challenge-response program.

The computer-implemented method may also be referred to as a method for distributed monitoring. The numbering of the first compute node, the first automation module, the first data probe and the second compute node, the second automation module, the first data probe shall demonstrate a coherent active chain of a safety functionality. Thus, the first data probe may be associated with the first compute node but be comprised by the second compute node and vice versa. A crosswise distribution of the first data probe and the second data probe to the first compute node and the second compute node may be advantageous.

The integrity of the automation system may be understood as a condition or state of the automation system, wherein each of a plurality of operational and technical parameters, in particular a majority of the plurality of operational and technical parameters, are within a respective predefined limit. The integrity may also be described as a logical correctness and a reliability of an operating system of the automation system, in particular of the first compute node and/or of the second compute node, a logical completeness of a hardware and/or a software of the automation system, in particular of the first compute node and/or of the second compute node, and/or data integrity of the automation system. The integrity may be a requirement for a correct and/or reliable operation of the first automation module on the first compute node and of the second automation module on the second compute node. In other words, the first automation module and/or the second automation module may potentially operate faulty or incorrect, if the integrity of the automation system is not given.

The first compute node may for example be a standard industry computer, a workstation, a server or a personal computer. The second compute node may for example be a standard industry computer, a workstation, a server or a personal computer. Additionally or alternatively the first and/or the second compute node may comprise or consist of a virtual machine. The first and the second compute node may implement a redundant configuration for automating the machine as both the first automation module and the second automation module may be configured to automate the machine independently from each other. In particular, the first compute node may be configured to automate the machine with the first automation module without interacting with the second compute node and vice versa.

The machine may for example be an industrial robot or another automatic motion machine, which may comprise grippers, tools or other production equipment for material handling, processing or reworking. In particular, the machine may be configured to operate partly automatic or fully automatic. It may for example be necessary to operate the machine in a controllable and reliable mode in order to mitigate a risk of material damage and/or injury of an operator. The machine may be configured to mechanically follow instructions given by the first automation signal and/or by the second automation signal. Additionally the machine may be configured to feedback information to the first compute node and/or the second compute node for example via a data connection. Feedback information may comprise a motor setting, a motor position, a gripper setting, a gripper position, an applied force, an error message, a driving current value and/or a voltage drop.

The first automation signal and the second automation signal may also be denoted as first control signal and second control signal, respectively, for controlling the machine.

The first automation module may be a first computer software module, which is configured for automating the machine and is installed on the first compute node. The second automation module may be a second computer software module, which is configured for automating the machine and is installed on the second compute node.

The second data probe may be a software module or software tool, which is configured to monitor a first system parameter, compute a first calculation, receive first data and/or publish first data. The second data probe may for example be an autonomous and/or external data probe, which is running in a first independent process, in particular independent of the first automation module. The second data probe may be configured to gather system data of the first compute node acting as a first test probe at several software control points.

The first data probe may be a software module or tool, which is configured to monitor a second system parameter, compute a second calculation, receive second data and/or publish second data. The first data probe may for example be an autonomous and/or external data probe, which is running in a second independent process, in particular independent of the second automation module. The first data probe may be configured to gather system data of the second compute node acting as a second test probe at several software control points.

In particular, the first data probe and the second data probe are configured, to communicate with each other according to the publish-subscribe pattern. For example, the first data probe and/or the second data probe may additionally be configured to communicate with other components of the automation system.

The publish-subscribe pattern may comprise or consist of a messaging pattern, where a publisher may announce and send a plurality of messages, wherein each message of the plurality of messages comprises a defined topic and is sent via a dedicated message channel. Arbitrary many subscribers may subscribe and receive one or more of the plurality of messages of the respective defined topic in the respective dedicated message channel. The message pattern may be a one-to-many communication, in contrast to a message pattern, where a sender sends a message directly to a receiver. In the publish-subscribe pattern, the subscriber expresses interest in at least one channel and may only receive the message that is of interest. The publisher as well as the subscriber do not necessarily need to have information about each other or operate in a coupled mode. The first data probe may be configured to operate as a first publisher and/or as a first subscriber. The second data probe may be configured to operate as a second publisher and/or as a second subscriber.

The first challenge-response program may for example be a protocol, in which the first challenging instance presents a challenge, and the first responding instance provides a response to the challenge. The challenge may be referred to as a question or task and the response may be referred to as an answer to the question or a result of the task. In particular, the protocol comprises checking the validity of the response by the first challenging instance. The validity of the response may be checked depending on a predetermined algorithm, which is known to the first challenging instance and to the first responding instance. A computation of the predetermined algorithm may include data, which are available to the first challenging instance and the first responding instance and/or have been shared prior to the computation. In particular, the first challenging instance may apply the predetermined algorithm to the challenge in order to validate the response of the first responding instance. The first challenging instance may for example compare a result of the computation of the predetermined algorithm with the response.

An advantage of the described invention is that the integrity of the automation system is evaluated in a reliable and comprehensive manner. The publish-subscribe pattern provides a dynamic network topology, which is easy to setup and integrate. Next to that the publisher and/or the subscriber may easily be replaced or changed over time. The method does not rely on a coupling process, but requires only a configuration of message channels at system runtime. Furthermore, the first challenge-response program allows the fast evaluation of the integrity and thus a detection of a failure or an error, which may compromise the automation system. The method may also be applied to an arbitrary data processing system, such as a standard personal computer, without a need to certify the data processing system for operational safety.

According to several implementations, the method comprises triggering a safe state of the machine depending on the evaluation of the integrity of the automation system.

In particular, the safe state may refer to an emergency stop of the machine and may thus stop, for example, a movement of the machine or a movement of a part of the machine. Triggering the safe state may be a consequence of a detected error within the automation system. The safe state may be triggered, for example, by the first challenging instance within the first challenge-response program. A first trigger signal for triggering the safe state may be, for example, published via a first emergency channel of the publish-subscribe pattern by the first data probe and/or a second trigger signal for triggering the safe state may be, for example, published via a second emergency channel of the publish-subscribe pattern by the second data probe. In particular, the safe state may be triggered immediately after evaluation of the integrity of the automation system, for example, immediately after a determination of a result of the evaluation, which does not meet a predefined requirement.

An advantage of such implementations is that the machine may be stopped immediately if the evaluation of the automation system, in particular of the first compute node and/or of the second compute node, does not comply with a respective predetermined requirement. As a consequence, material damage and/or personal injury may be avoided due to a fast reaction time of the computer-implemented method.

According to several further implementations, carrying out the first challenge-response program comprises initiating the first challenge-response program by publishing a first challenge by the second data probe. Furthermore, carrying out the first challenge-response program comprises receiving the first challenge by the first data probe, computing a first result of the first challenge by the first data probe and publishing the first result by the first data probe. Additionally, carrying out the first challenge-response program comprises computing a second result of the first challenge by the second data probe. Additionally, carrying out the first challenge-response program comprises receiving the first result by the second data probe and comparing the first result to the second result by the second data probe, wherein the result of the first challenge-response program depends on a result of the comparison.

The computation of the second result by the second data probe may depend on data that is only available to the second data probe. In particular, the first challenge is published according to the publish-subscribe pattern and the second data probe may categorize the first challenge into a first channel. The first data probe may be a subscriber to the first channel and thus receive the first challenge from the second data probe.

The computation of the first result by the first data probe may depend on data that is only available to the first data probe. The first data probe may categorize the first result into a second channel and publish the first result via the publish-subscribe pattern. The second data probe may be a subscriber to the second channel and thus receive the first result from the first data probe.

In other words, the first result and the second result may both be described as intermediate results in particular compared to the result of the first challenge-response program, which may be described as a final result of the first challenge-response program.

The second data probe may be configured with sufficient operating resources on the first compute node in order to compare the first result to the second result. The result of the first challenge-response program may be a binary number, wherein a value "one" may for example represent a positive result of the first challenge-response program and a value "zero" may represent a negative result of the first challenge-response program or vice versa. For example, the negative result may correspond to a deviation between the first result and the second result.

An advantage of such implementations is that both the first compute node and the second compute node compute a respective result of the first challenge independently of each other. Subsequently, the first result and the second result are compared and any deviation may directly influence the evaluation of the integrity of the automation system. As identical inconsistencies in independent computation nodes are highly unlikely, for many applications these kind of errors can be neglected. By using independent computation nodes for the calculation of the integrity, the reliability of the evaluation of the integrity is increased.

According to several further implementations the first challenge is published and/or received via a first data channel of the publish-subscribe pattern and/or the first result of the first challenge is published and/or received via the first data channel of the publish-subscribe pattern.

According to several further implementations the first challenge is published and/or received via the first data channel of the publish-subscribe pattern and/or the first result of the first challenge is published and/or received via a second data channel of the publish-subscribe pattern.

An advantage of such implementations is that the first challenge and the first result do not interfere with each other but are published on separate data channels. The publish-subscribe pattern may allow a further subscriber to the first data channel and/or to the second data channel to receive respective information.

According to several further implementations, the method comprises generating a first dataset depending on system data of the first compute node and publishing the first dataset by the second data probe. Additionally, the method comprises generating a second dataset depending on system data of the second compute node and publishing the second dataset by the first data probe. Furthermore, the method comprises receiving the first dataset and computing the first result of the first challenge depending on the first dataset and/or the second dataset by the first data probe. Furthermore, the method comprises receiving the second dataset and computing the second result of the first challenge depending on the first dataset and/or the second dataset by the second data probe.

The first dataset may for example comprise a plurality of system parameters of the first compute node for example a CPU speed, a CPU load, a memory utilization, a network configuration and/or a network utilization. The second dataset may comprise a plurality of system parameters of the second compute node such as a CPU speed, a CPU load, a memory utilization, a network configuration and/or a network utilization. In particular, the second data probe may be referred to as an external data probe of the first compute node and the first data probe may be referred to as an external data probe to the second compute node.

The first result as well as the second result may be computed with the predetermined algorithm which may use the first dataset and/or the second dataset as input data.

The first dataset may be published and/or received via a third data channel of the publish-subscribe pattern and the second dataset may be published and/or received via the third data channel of the publish-subscribe pattern. The third data channel of the publish-subscribe pattern may be referred to as a probe coordination link for the first data probe with the second data probe and vice versa.

An advantage of such implementations is that the first result and the second result each depend on reciprocal information from the respective other compute node and as such the evaluation of the automation system is improved.

According to several further implementations, the first compute node comprises a further first data probe, the second compute node comprises a further second data probe, wherein the further first data probe and the further second data probe are configured to communicate by publishing and receiving data according to the publish-subscribe pattern. Therein, the method comprises generating a further first dataset depending on data of the first automation module, depending on the first automation signal and/or depending on a status of the machine by the further first data probe. Additionally, the method comprises generating a further second dataset depending on data of the second automation module, depending on the second automation signal and/or depending on the status of the machine by the further second data probe. Furthermore, the method comprises publishing the further first dataset by the further first data probe and publishing the further second dataset by the further second data probe. Furthermore, the method comprises receiving the further first dataset and/or the further second dataset by the first data probe and receiving the further first dataset and/or the further second dataset by the second data probe. Additionally, the method comprises computing the first result of the first challenge depending on the further first dataset and/or depending on the further second dataset by the first data probe. Furthermore, the method comprises computing the second result of the first challenge depending on the further first dataset and/or depending on the further second dataset by the second data probe.

The numbering of the further first data probe and the further second data probe is in line with the coherent active chain of the safety functionality. Thus, the further first data probe may be associated with to the first compute node but be comprised by the first automation module. Furthermore the further second data probe may be associated with the second compute node but be comprised by the second automation module.

The further first data probe may be a software module or software tool, which is configured to monitor a further first system parameter and/or a first automation data set and/or a first status of the safety functionality, compute a further first calculation, receive further first data and/or publish further first data. The further first data probe may, for example, be an integrated and/or internal data probe, which is running within the first automation module or is integrated in the first automation module. The further first data probe may be configured to gather automation data of the first automation module acting as a further first test probe at several automation software control points.

The further second data probe may be a software module or software tool which is configured to monitor a further second system parameter and/or a second automation data set and/or a second status of the safety functionality, compute a further second calculation, receive further second data and/or publish further second data. The second data probe may for example be an integrated and/or internal data probe, which is running within the second automation module or is integrated in the second automation module. The further second data probe may be configured to gather automation data of the second automation module acting as a further second test probe at several software control points.

In particular, the further first data probe and the further second data probe are configured to communicate with each other according to the public-subscribe pattern. In particular, the further first data probe and the further second data probe are configured to communicate with the first data probe and the second data probe respectively according to the publish-subscribe pattern. For example, the further first data probe and/or the further second data probe may additionally be configured to communicate with other components of the automation system.

The further first data probe may be configured to monitor and/or buffer variables of the first automation module and/or of the machine. The further second data probe may be configured to monitor and/or buffer variables of the second automation module and/or of the machine.

The publication of the further first dataset by the further first data probe may be performed via a fourth data channel of the publish-subscribe pattern. The fourth data channel may be referred to as a probe data link for data probe to data probe communication. The publication of the further second dataset by the further second data probe may be performed via the fourth data channel of the publish-subscribe pattern. The first data probe and/or the second data probe may be configured to be a subscriber of the fourth data channel of the publish-subscribe pattern.

An advantage of such implementations is that the evaluation includes gathering automation data of the first automation module and/or and automation data of the second automation module. This may enhance the result of the evaluation due to a comprehensive data basis. The first compute node and the second compute node may each compute a respective result of the first challenge via at least two data probes, which may have access to different parts of the first compute node or the second compute node respectively.

According to several further implementations, the method comprises carrying out a second challenge-response program by communication via the publish-subscribe pattern, wherein the first data probe acts as a second challenging instance and the second data probe acts as a second responding instance. Furthermore the evaluation of the integrity of the automation system depends on a result of the second challenge-response program.

In particular, the second challenge-response program may run in parallel to the first challenge-response program. The first challenge-response program and the second challenge-response program may start simultaneously, for example within a same cycle, or alternatively sequentially with a time delay, for example sequentially within the same cycle or sequentially in different cycles.

The described features of the first challenge-response program may be identical or partially identical to the features of the second challenge-response program. In particular, the second challenge-response program may comprise a further predetermined algorithm, which may be known to the first compute node and the second compute node for validating the response to the second challenge-response program.

An advantage of such implementations is that the automation system comprises the second challenge-response program in parallel to the first challenge-response program and as such the integrity of the automation system is evaluated more thoroughly via two individual challenge-response programs possibly with deviating predefined algorithms.

According to several further implementations, carrying out the second challenge-response program, comprises initiating the second challenge-response program by publishing a second challenge by the first data probe. Additionally the method comprises receiving the second challenge by the second data probe, computing a further second result of the second challenge by the second data probe and publishing the further second result by the second data probe. Furthermore, the method comprises computing a further first result of the second challenge by the first data probe and receiving the further second result by the first data probe. Additionally, the method comprises further comparing the further first result to the further second result by the first data probe, wherein the result of the second challenge-response program depends on a result of the further comparison.

Above-described features of the first challenge may be identical or partially identical to features of the second challenge.

In other words, the further first result and the further second result may both be described as further intermediate results in particular compared to the result of the second challenge-response program, which may be described as a final result of the second challenge-response program.

An advantage of such implementations is that the computing of the further first result and the computing of the further second result is performed independently of the computing of the first result and the second result. As such, the second challenge may extend a validation intensity of the evaluation of the integrity of the automation system.

According to several further implementations, the method comprises computing the further second result of the second challenge depending on the first dataset by the second data probe and/or depending on the second dataset by the second data probe. Furthermore, the method comprises computing the further first result of the second challenge, depending on the first dataset by the first data probe and/or depending on the second dataset by the first data probe.

An advantage of such implementations is that alternating challenge-response programs increase available system data and, thus, increase a number of available system properties. This may lead to an enhanced evaluation of the integrity, considering part of or all available system data and/or system properties simultaneously.

According to several further implementations, the method comprises computing the further first result of the second challenge depending on the further first dataset by the first data probe and/or depending on the further second dataset by the first data probe. Furthermore, the method comprises computing the further second result of the second challenge depending on the further first dataset by the second data probe and/or depending on the further second dataset by the second data probe.

An advantage of such implementations is that the evaluation of the integrity of the automation system is more detailed as a data basis of the computation of each result is enhanced.

According to several further implementations, the result of the first challenge-response program and/or the result of the second challenge-response program is published by the first data probe and/or by the second data probe.

The publication of the result of the first challenge-response program and/or the result of the second challenge-response program may be performed via a fifth data channel of the publish-subscribe pattern. The fifth data channel may be referred to as a communication of final results of the current challenge-response program. In particular, the first data probe, the second data probe and/or other components of the automation system may be configured to monitor and/or buffer the result of the first challenge-response program and/or the result of the second challenge-response program for a predefined period of time.

An advantage of such implementations is that the result of the first challenge-response program and/or the result of the second challenge-response program is available to subscribers, which have been configured to receive information published on, for example, the fifth data channel of the publish-subscribe pattern. The result of the first challenge-response program and/or the result of the second challenge-response program may be an indicator for the first data probe, for the second data probe and/or for the other components of the automation system for further evaluations of the automation system.

According to a further aspect of the invention, a computer-implemented method for evaluating a continued integrity of an automation system for automating a machine is provided. The method comprises a plurality of cycles and a method according to the invention is carried out within each cycle of the plurality of cycles.

In other words, the method may be described as time-triggered and/or as cyclic. For example, each cycle of the plurality of cycles may follow immediately on a previous cycle of the plurality of cycles. Each cycle of the plurality of cycles may be characterized by a predefined time period in which, for example, a communication, a computation, an evaluation and/or a buffering may be performed. The predefined time period may be known in particular to the first compute node and to the second compute node. For example, the method may be described as a synchronous computation process within the automation system, in particular synchronous between the first compute node and the second compute node.

According to several implementations, the method comprises evaluating in each cycle of the plurality of cycles the continued integrity of the automation system depending on the first challenge-response program in the respective cycle and/or depending on the result of the second challenge-response program in the respective cycle and/or depending on the result of the first challenge-response program in at least one previous cycle and/or depending on the result of the second challenge-response program in at least one previous cycle.

The first data probe, the second data probe and/or other components of the automation system may be configured to monitor and buffer the continued integrity of the automation system. In other words, the continued integrity of the automation system may be a summary of the integrity of the automation system in the respective cycle and/or of the integrity of the automation system in at least one previous cycle. As such, the method may be described as considering a history operator of the automation system.

An advantage of such implementations is that the continued integrity may give a comprehensive overview of the integrity of the automation system across several cycles. The continued integrity may reveal an additional system error, which is indicated over a predefined time period. The continued integrity of the automation system may also offer possibilities of predictive maintenance to the automation system.

According to several further implementations, the method comprises evaluating in each cycle of the plurality of cycles the continued integrity of the automation system depending on the first dataset, the second dataset, the further first dataset and/or the further second dataset of the respective cycle and/or depending on the first dataset, the second dataset, the further first dataset and/or the further second of at least one previous cycle.

In particular, the evaluation of the continued integrity of the automation system may be described as considering time series data. In other words, the continued integrity of the automation system may rely on several datasets, which have been gathered in more than one cycle of the plurality of cycles.

An advantage of the described invention is, that the evaluation of the continued integrity may be based on a comprehensive overview of system and/or automation data, of more than one cycle of the plurality of cycles. A long-term analysis of such system and/or automation data may reveal a further error of the automation system, and as such increase a rate of success of the evaluation.

According to a further aspect of the invention, an automation system for automating a machine is provided. Therein, the automation system comprises a first compute node. The first compute node comprises a first automation module, which is configured to generate a first automation signal for automating the machine. Additionally, the first compute node comprises a second data probe. Furthermore, the automation system comprises a second compute node. The second compute node comprises a second automation module, which is configured to generate a second automation signal for automating the machine. Additionally, the second compute node comprises a first data probe. The first data probe and the second data probe are configured to communicate by publishing and receiving data according to a publish-subscribe pattern. The automation system is configured to carry out a first challenge-response program via the publish-subscribe pattern, wherein the second data probe acts as a first challenging instance and the first data probe acts as a first responding instance. Furthermore, the automation system is configured to evaluate an integrity of the automation system depending on a result of the first challenge-response program.

Further implementations of the automation system according to the invention follow directly from the various embodiments of the computer-implemented methods according to the invention and vice versa. In particular, individual features and corresponding explanations as well as advantages relating to the various implementations of the computer-implemented methods according to the invention can be transferred analogously to corresponding implementations of the automation system according to the invention. In particular, the automation system according to the invention is designed or programmed to carry out a computer-implemented method according to the invention. In particular, the automation system according to the invention carries out a computer-implemented method according to the invention.

According to a further aspect of the invention, a computer program product is provided. The computer program product comprises instructions, which, when executed by an automation system, cause the automation system to carry out a computer-implemented method according to the invention.

For example, the instructions may comprise first instructions to be executed by the first compute node and second instructions to be executed by the second compute node.

When the first instructions are executed by the first compute node, and the second instructions are executed by the second compute node, the first instructions and the second instructions cause the first compute node and the second compute node to carry out the first challenge-response program, wherein the second data probe acts as the first challenging instance and the first data probe acts as the first responding instance. For example, the first instructions cause the first compute node to evaluate the integrity of the automation system depending on the result of the first challenge-response program and/or the second instructions cause the second compute node to evaluate the integrity of the automation system depending on the result of the first challenge-response program.

In some implementations, the first instructions cause the first compute node to initiate the first challenge-response program by publishing the first challenge by the second data probe, to compute the second result of the first challenge by the second data probe, and to compare the first result to the second result by the second data probe.

In some implementations, the second instructions cause the second compute node to compute the first result of the first challenge by the first data probe and to publish the first result by the first data probe.

The instructions may be provided as program code, for example. The program code can for example be provided as binary code or assembler and/or as source code of a programming language, for example C, and/or as program script, for example Python.

The computer program product may be a computer program comprising the instructions or a computer-readable storage medium storing said computer program.

Further features and feature combinations of the invention are obtained from the figures and their description as well as the claims. In particular, further implementations of the invention may not necessarily contain all features of one of the claims. Further embodiments of the inventions may comprise features or combinations of features, which are not recited in the claims.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
FIG 1 shows a schematic block diagram of an exemplary implementation of a computer-implemented method for evaluating an integrity of an automation system according to the invention; and
FIG 2 shows a schematic block diagram of a further exemplary implementation of a computer-implemented method for evaluating an integrity of an automation system according to the invention; and
FIG 3 shows a schematic block diagram of a further exemplary implementation of a computer-implemented method for evaluating an integrity of an automation system according to the invention; and
FIG 4 shows a schematic flow diagram of a further exemplary implementation of a computer-implemented method for evaluating an integrity of an automation system according to the invention.

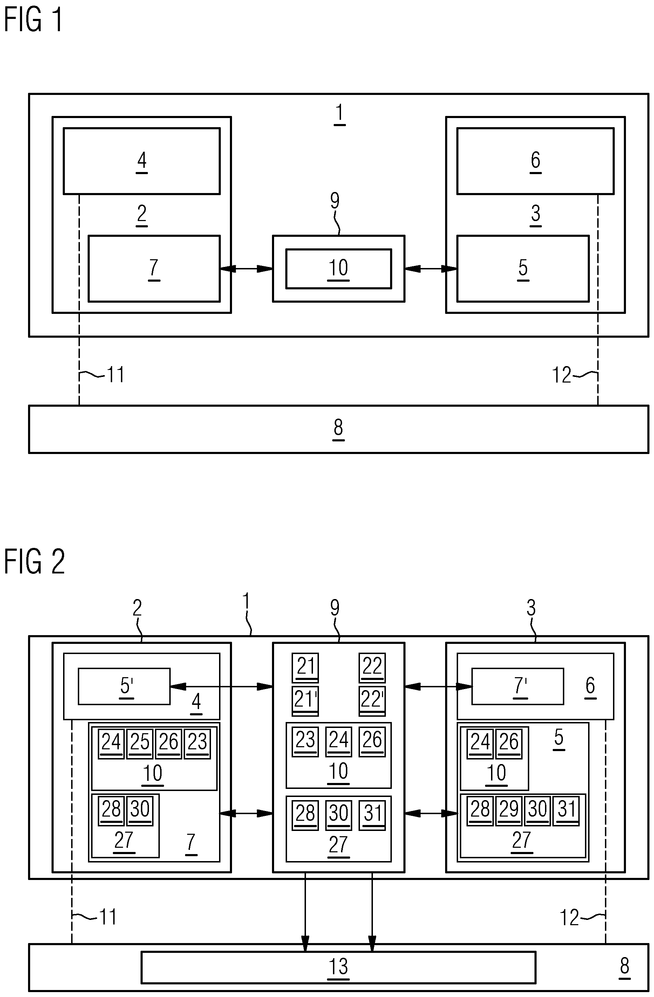

FIG 1 schematically shows aspects of an exemplary implementation of the computer-implemented method for evaluating an integrity of an automation system 1 for automating a machine 8 according to the invention. Therein, the method comprises providing a first compute node 2 of the automation system 1, wherein the first compute node 2 comprises a first automation module 4 for generating a first automation signal 11 for automating the machine 8 and a second data probe 7. Additionally, the method comprises providing a second compute node 3 of the automation system 1, wherein the second compute node 3 comprises a second automation module 6 for generating a second automation signal 12 for automating the machine 8 and a first data probe 5, wherein the first data probe 5 and the second data probe 7 are configured to communicate by publishing and receiving data according to a publish-subscribe pattern 9. Furthermore, the method comprises carrying out a first challenge-response program 10 by communication via the publish-subscribe pattern 9, wherein the second data probe 7 acts as a first challenging instance and the first data probe 5 acts as a first responding instance. Additionally, the method comprises evaluating the integrity of the automation system 1 depending on a result 23 (see FIG 2, FIG 3 or FIG 4) of the first challenge-response program 10.

A concept according to the invention may be referred to as a distributed monitor. Each of the first data probe 5, the second data probe 7 and a potential further data probe may be considered as a monitor. The respective data probe 5, 7, 5', 7' (see FIG 2, FIG 3 or FIG 4) may be distributed in various positions of the automation system 1 and thus have access to individual data and may be configured to carry out computations on a designated compute node 2, 3 for example depending on various datasets 21, 21', 22, 22' (see FIG 2, FIG 3 or FIG 4). This may allow the distributed monitor to evaluate the integrity of the automation system 1 in a comprehensive manner. A crosswise distribution of the data probes 5, 7, 5', 7' to the compute nodes 2, 3 may be advantageous.

A communication between the first data probe 5 to the second data probe 7 may be carried out by the publish-subscribe pattern 9. Additionally, the method may comprise point-to-point communication, as for example shown in FIG 1 by the first automation signal 11 and the second automation signal 12.

FIG 2 shows a schematic block diagram of a further implementation of the invention. FIG 2 shows a safe state 13 of the machine 8, which may be triggered by at least one data probe 5, 5', 7, 7' according to the publish-subscribe pattern 9.

The second data probe 7 may publish a first challenge 24, compute a second result 25 of the first challenge 24, receive a first result 26 of the first challenge 24 and generate the result 23 of the first challenge-response program 10 within the first challenge-response program 10. The first data probe 5 may receive the first challenge 24 and compute the first result 26 within the first challenge-response program 10. The first challenge 24, the first result 26 and the result 23 of the first challenge-response program 10 may be communicated according to the publish-subscribe pattern 9 within the first challenge-response program 10.

The method may comprise carrying out a second challenge-response program 27. The first data probe 5 may publish a second challenge 28, receive a further second result 30 of the second challenge 28, compute a further first result 29 of the second challenge 28 and generate a result 31 of the second challenge-response program 27. The second data probe 7 may receive the second challenge 28 and compute the further second result 30 within the second challenge-response program 27. The second challenge 28, the further second result 30 and the result 31 of the second challenge-response program 27 may be communicated according to the publish-subscribe pattern 9 within the second challenge-response program 27.

Furthermore, the first compute node 2 may comprise a further first data probe 5', which may, for example, be integrated in the first automation module 4. The second compute node 3 may comprise a further second data probe 7', which may, for example, be integrated in the second automation module 6. The further first data probe 5' and the further second data probe 7' may be configured to communicate by publishing and receiving data according to the publish-subscribe pattern 9.

Additionally, a first dataset 21, a further first dataset 21', a second dataset 22 and a further second dataset 22' may be communicated according to the publish-subscribe pattern 9. The first dataset 21 may be published by the second data probe 7, the further first dataset 21' may be published by the further first data probe 5', the second dataset 22 may be published by the first data probe 5 and the further second dataset 22' may be published by the further second data probe 7'. Each data probe 5, 5', 7, 7' may be configured to receive a respective dataset 21, 21', 22, 22' depending on an individual subscription configuration.

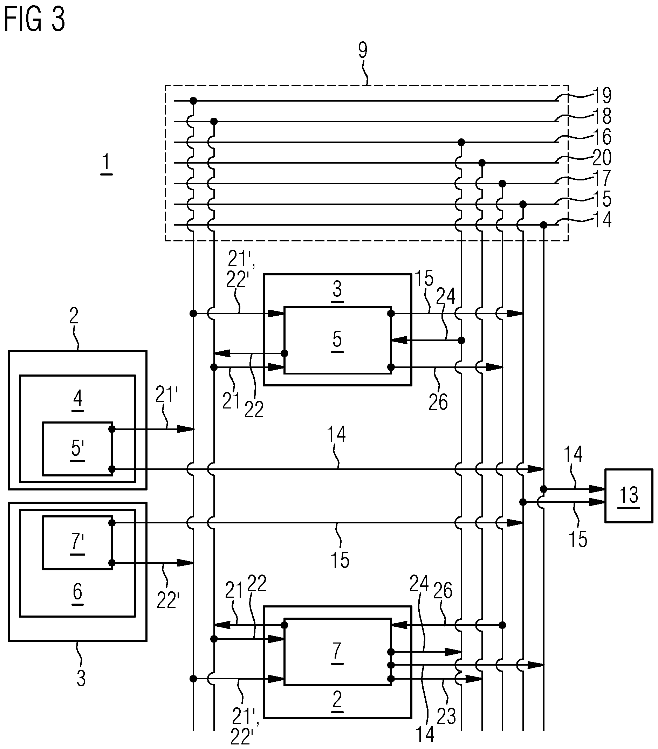

FIG 3 shows details of the publish-subscribe pattern 9 in a further exemplary implementation of the computer-implemented method. The first data probe 5, the further first data probe 5', the second data probe 7 and the further second data probe 7' may communicate via the publish-subscribe pattern 9. Several channels 14, 15, 16, 17, 18, 19, 20 may be defined in order to separate information and publish the information to interested subscribers. In this manner, information flow may be optimized and reduced in order not to unnecessarily increase a memory requirement of one of the involved data probes 5, 5', 7, 7' or other components of the automation system 1.

The second data probe 7 and the further first data probe 5' may for example trigger the safe state 13 of the machine 8 by publishing a signal on a second emergency channel 14. The first data probe 5 and the further second data probe 7' may for example trigger the safe state 13 of the machine 8 by publishing a signal on a first emergency channel 15. The safe state 13 of the machine 8 may for example comprise a data processing unit or a part of the data processing unit, which allows the machine 8 to stop for example all motion of moving parts. The safe state 13 may also be configured to stop all computation or other activity of the machine 8 and thus allow a service personal to check the automation system 1 and for example repair or restart the first compute node 2 and/or the second compute node 3 and/or the automation system 1. In particular in the safe state, the machine 8 may be considered as safe in terms of a risk of personal injury or a potential damage or parts or other components, for example parts of the automation system.

A first data channel 16 may be provided for publishing a first challenge 24 of the first challenge-response program 10. Additionally the first data channel 16 may be used for a further challenge of a further challenge-response program, for example for the second challenge 28 of the second challenge-response program 27. The first data channel 16 may be designated for communicating the challenge-response program that the distributed monitor calculates currently. A second data channel 17 may be provided for publishing the first result 26 to the first challenge 24 of the first challenge-response program 10. The second data channel 17 may be used for a further result of the further challenge, for example for the further second result 30 of the second challenge 28. The second data channel 17 may designated for communication of intermediate results of a current challenge-response program. In this manner, a communication is separated between a challenge and a result due to the separate channels. Subscribers, which are interested in challenges 24, 28 may subscribe to the first data channel 16, while subscribers, which are interested in results 23, 30 may subscribe to the second data channel 17.

The method may for example use a third data channel 18 and a fourth data channel 19, which are configured to exchange datasets 21, 21', 22, 22', for example depending on system parameters and/or automation data sets, between each data probe 5, 5', 7, 7'. In particular, the third data channel 18 may be used by the second data probe 7 for publishing a first dataset 21 and/or by the first data probe 5 for publishing a second dataset 22. The third data channel 18 may be referred to as a probe coordination link. In particular, the fourth data channel 19 may be used by the further first data probe 5' for publishing a further first dataset 21' and/or by the further second data probe 7' for publishing a further second dataset 22'. The fourth data channel 19 may be referred to as a probe data link.

The method may for example use a fifth data channel 20, which is configured to publish a result of the current challenge-response program, in particular the result 23 of the first challenge-response program 10 and/or the result 31 of the second challenge-response program 27. The fifth data channel 20 may be designated for communicating final results of the current challenge-response program.

In particular, the publish-subscribe pattern 9 may comprise the first emergency channel 15, the second emergency channel 14, the first data channel 16, the second data channel 17, the third data channel 18, the fourth data channel 19 and the fifth data channel 20. In other embodiments, the invention may additionally or alternatively comprise further data channels.

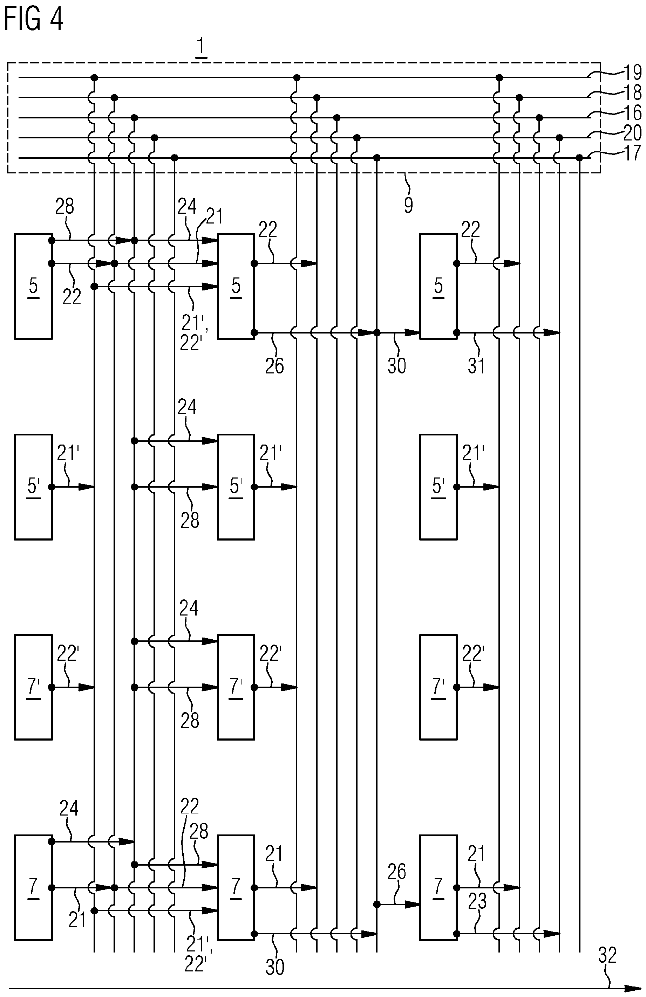

FIG 4 shows a schematic block diagram of a further embodiment of the computer-implemented method. If not otherwise stated parts of the features, in particular all features of the embodiment shown in FIG 3 may apply to FIG 4.

Next to the representation of the publish-subscribe pattern 9 including the first data channel 16, the second data channel 17, the third data channel 18, the fourth data channel 19 and the fifth data channel 20, the schematic block diagram shows an exemplary chronological sequence of the method. Therein, the first challenge 24 may be published in parallel to a second challenge 28. The subscribers of each challenge may subsequently receive the respective challenge. In particular, the first data probe 5, the further first data probe 5' and the further second data probe 7' may receive the first challenge 24. In parallel for example, the second data probe 7, the further first data probe 5' and the further second data probe 7' may receive the second challenge 28.

In parallel or subsequently, the second data probe 7 may publish the first dataset 21, the first data probe 5 may publish the second dataset 22, the further first data probe 5' may publish the further first dataset 21' and the further second data probe 7' may publish the further second dataset 22'. The publication of each dataset 21, 21', 22, 22' may for example be carried out repeatedly, in particular continuously. In particular, each dataset 21, 21', 22, 22' may differ in each repetition of the publication. Each of the data probes 5, 5', 7, 7' may receive the respective dataset 21, 21', 22, 22' depending on a subscription to the respective data channel 18, 19. As datasets may be available at for example the first data probe 5, the further first data probe 5', the second data probe 7 and the further second data probe 7' at a same point in time, the computation of a respective result may be carried out in parallel on each of the data probes 5, 5', 7, 7'.

After computing the first result 26, the first data probe 5 may publish the first result 26 to the second data channel 17. After computing the further second result 30, the second data probe 7 may publish the further second result 30 to the second data channel 17. The second data probe 7 may then receive the first result 26, compute and publish the result 23 of the first challenge-response program 10. The fifth data channel 20 may be used for the publication of the result 23 of the first challenge-response program 10. In parallel or subsequently, the first data probe 5 may receive the further second result 30, compute and publish a result 31 of the second challenge-response program 27. The fifth data channel 20 may be used for the publication of the result 31 of the second challenge-response program 31.

A duration of the exemplary chronological sequence may be a cycle 32. In at least one further aspect of the invention, the method may comprise a plurality of cycles 32. Within each cycle the exemplary chronological sequence or a part of the exemplary chronological sequence may be carried out.

The method may comprise monitoring and/or buffering information from at least one previous cycle 32. For example the result 23 of the first challenge-response program 10 of the at least one previous cycle 32 and/or the result 31 of the second challenge-response program 27 of the at least one previous cycle 32 may be available in a current cycle. A continued integrity of the automation system 1 may be evaluated depending on results 23, 32 of the at least one previous cycle and/or of the current cycle. The dependency on results 23, 32 may be referred as a history operator.

Alternatively or subsequently, the method may comprise monitoring and/or buffering datasets 21, 21', 22, 22' from the at least one previous cycle 32. For example the first dataset 21, the further first dataset 21', the second dataset 22 and the further second dataset 22' of the at least one previous cycle may be available in the current cycle. The continued integrity of the automation system 1 may be evaluated depending on the datasets 21, 21', 22, 22' of the at least one previous cycle and/or of the current cycle. The dependency on datasets 21, 21', 22, 22' may referred to as time series data.

The first data probe 5, which is deployed on the second compute node 3, generates the second dataset 22 including data from and/or about the first data probe 5 and the second compute node 3, because of being deployed on the second compute node 3. The second data probe 7, which is deployed on the first compute node 2, generates the first dataset 21 including data from and/or about the second data probe 7 and the first compute node 2, because of being deployed on the first compute node 2.

The first data probe 5 sends and/or publishes the second dataset 22 and receives the first dataset 21 and due to the stateless and functional architecture also receives the second dataset 22. The second data probe 7 sends and/or publishes the first dataset 21 and receives the second dataset 22 and due to the stateless and functional architecture also receives the first dataset 21.

In particular, each of the challenge-response programs 10, 27 are computed gradually, so that two challenge-response programs 10, 27 may be computed interlocked in time.

A parallel data exchange within the automation system 1, in particular within the first data probe 5, the second data probe 7, the further first data probe 5' and the further second data probe 7', may be achieved by a cyclic approach including the cycle 32 and by the publish-subscribe pattern 9 including data channels 14, 15, 16, 17, 18, 19, 20. The automation system 1 may be referred to as a time-triggered system. All datasets 21, 21', 22, 22' and results 23, 25, 26, 29, 30, 31 may be available simultaneously via the data channels 14, 15, 16, 17, 18, 19, 20, in particular with a delay of one cycle 32, which may be necessary for the parallel data exchange. In particular for data consistency, all datasets 21, 21', 22, 22' and results 23, 25, 26, 29, 30, 31 of the current cycle 32 may originate from an identical previous cycle of the at least one previous cycle.

In particular, the second result 25 of the first challenge 24 of the first challenge-response program 10 may be published by the second data probe 7, for example on the second data channel 17. In particular, the further first result 29 of the second challenge 28 of the second challenge-response program 27 may be published by the first data probe 5, for example on the second data channel 17. As the second data channel 17 may designated for communication of intermediate results of a current challenge-response program, the second result 25 as well as the further first result 29 may by designated as intermediate results.

Independent of the grammatical term usage, individuals with male, female or other gender identities are included within the term.

## Claims

1. Computer-implemented method for evaluating an integrity of an automation system (1) for automating a machine (8), comprising
- providing a first compute node (2) of the automation system (1), wherein the first compute node (2) comprises a first automation module (4) for generating a first automation signal (11) for automating the machine (8) and a second data probe (7);
- providing a second compute node (3) of the automation system (1), wherein the second compute node (3) comprises a second automation module (6) for generating a second automation signal (12) for automating the machine (8) and a first data probe (5), wherein the first data probe (5) and the second data probe (7) are configured to communicate by publishing and receiving data according to a publish-subscribe pattern (9);
- carrying out a first challenge-response program (10) by communication via the publish-subscribe pattern (9), wherein the second data probe (7) acts as a first challenging instance and the first data probe (5) acts as a first responding instance; and
- evaluating the integrity of the automation system (1) depending on a result (23) of the first challenge-response program (10).

2. Computer-implemented method according to claim 1, wherein the method comprises triggering a safe state (13) of the machine (8) depending on the evaluation of the integrity of the automation system (1).

3. Computer-implemented method according to one of the preceding claims, wherein carrying out the first challenge-response program (10) comprises
- initiating the first challenge-response program (10) by publishing a first challenge (24) by the second data probe (7);
- receiving the first challenge (24) by the first data probe (5), computing a first result (26) of the first challenge (24) by the first data probe (5) and publishing the first result (26) by the first data probe (5);
- computing a second result (25) of the first challenge (24) by the second data probe (7);
- receiving the first result (26) by the second data probe (7);
- comparing of the first result (26) to the second result (25) by the second data probe (7), wherein the result (23) of the first challenge-response program (10) depends on a result of the comparison.

4. Computer-implemented method according to claim 3, wherein the first challenge (24) is published and/or received via a first data channel (16) of the publish-subscribe pattern (9) and/or the first result (26) of the first challenge (24) is published and/or received via a second data channel (17) of the publish-subscribe pattern (9).

5. Computer-implemented method according to claim 3 or 4, wherein the method comprises
- generating a first dataset (21) depending on system data of the first compute node (2) and publishing the first dataset (21) by the second data probe (7);
- generating a second dataset (22) depending on system data of the second compute node (3) and publishing the second dataset (22) by the first data probe (5);
- receiving the first dataset (21) and computing the first result (26) of the first challenge (24) depending on the first dataset (21) and/or the second dataset (22) by the first data probe (5); and
- receiving the second dataset (22) and computing the second result (25) of the first challenge (24) depending on the first dataset (21) and/or the second dataset (22) by the second data probe (7).

6. Computer-implemented method according to one of the claims 3 to 5, wherein the first compute node (2) comprises a further first data probe (5'), the second compute node (3) comprises a further second data probe (7'), wherein the further first data probe (5') and the further second data probe (7') are configured to communicate by publishing and receiving data according to the publish-subscribe pattern (9) and wherein the method comprises
- generating a further first dataset (21') depending on data of the first automation module (4) and/or depending on the first automation signal (11) and/or depending on a status of the machine (8) by the further first data probe (5');
- generating a further second dataset (22') depending on data of the second automation module (6) and/or depending on the second automation signal (12) and/or depending on the status of the machine (8) by the further second data probe (7');
- publishing the further first dataset (21') by the further first data probe (5');
- publishing the further second dataset (22') by the further second data probe (7');
- receiving the further first dataset (21') and/or the further second dataset (22') by the first data probe (5);
- receiving the further first dataset (21') and/or the further second dataset (22') by the second data probe (7);
- computing the first result (26) of the first challenge (24) depending on the further first dataset (21') and/or depending on the further second dataset (22') by the first data probe (5); and
- computing the second result (25) of the first challenge (24) depending on the further first dataset (21') and/or depending on the further second dataset (22') by the second data probe (7).

7. Computer-implemented method according to one of the preceding claims, wherein
- the method comprises carrying out a second challenge-response program (27) by communication via the publish-subscribe pattern (9), wherein the first data probe (5) acts as a second challenging instance and the second data probe (7) acts as a second responding instance; and
- the evaluation of the integrity of the automation system (1) depends on a result (31) of the second challenge-response program (27).

8. Computer-implemented method according to claim 7 wherein carrying out the second challenge-response program (27) comprises
- initiating the second challenge-response program (27) by publishing a second challenge (28) by the first data probe (5);
- receiving the second challenge (28) by the second data probe (7), computing a further second result (30) of the second challenge (28) by the second data probe (7) and publishing the further second result (30) by the second data probe (7);
- computing a further first result (29) of the second challenge (28) by the first data probe (5);
- receiving the further second result (30) by the first data probe (5);
- further comparing the further first result (29) to the further second result (30) by the first data probe (5), wherein the result (31) of the second challenge-response program (27) depends on a result of the further comparison.

9. Computer-implemented method according to claims 5 and 8, wherein the method comprises
- computing the further second result (30) of the second challenge (28) depending on the first dataset (21) by the second data probe (7) and/or depending on the second dataset (22) by the second data probe (7); and/or
- computing the further first result (29) of the second challenge (28) depending on the first dataset (21) by the first data probe (5) and/or depending on the second dataset (22) by the first data probe (5).

10. Computer-implemented method according to claim 6 and one of claims 8 or 9, wherein the method comprises
- computing the further first result (29) of the second challenge (28) depending on the further first dataset (21') by the first data probe (5) and/or depending on the further second dataset (22') by the first data probe (5); and/or
- computing the further second result (30) of the second challenge (28) depending on the further first dataset (21') by the second data probe (7) and/or depending on the further second (22') dataset by the second data probe (7).

11. Computer-implemented method according to one of claims 7 to 10, wherein the result (23) of the first challenge-response program (10) and/or the result (31) of the second challenge-response program (27) is published by the first data probe (5) and/or by the second data probe (7).

12. Computer-implemented method for evaluating a continued integrity of an automation system (1) for automating a machine (8), wherein the method comprises
- a plurality of cycles (32) and a method according to claim 11 is carried out within each cycle (32) of the plurality of cycles (32); and
- evaluating in each cycle (32) of the plurality of cycles (32) the continued integrity of the automation system (1) depending on the result (23) of the first challenge-response program (10) in the respective cycle (32) and/or depending on the result (31) of the second challenge-response program (27) in the respective cycle (32) and/or depending on the result (23) of the first challenge-response program (10) in at least one previous cycle (32) and/or depending on the result (31) of the second challenge-response program (27) in at least one previous cycle (32).

13. Computer-implemented method for evaluating a continued integrity of an automation system (1) for automating a machine (8), wherein the method comprises
- a plurality of cycles (32) and a method according to claims 5 and 6 is carried out within each cycle (32) of the plurality of cycles (32); and
- evaluating in each cycle (32) of the plurality of cycles (32) the continued integrity of the automation system (1) depending on the first dataset (21), the second dataset (22), the further first dataset (21') and/or the further second dataset (22') of the respective cycle (32) and/or depending on the first dataset (21), the second dataset (22), the further first dataset (21') and/or the further second dataset (22') of at least one previous cycle (32).

14. Automation system (1) for automating a machine (8), wherein
- the automation system (1) comprises a first compute node (2);
- the first compute node (2) comprises a first automation module (4), which is configured to generate a first automation signal (11) for automating the machine (8);
- the first compute node (2) comprises a second data probe (7);
- the automation system (1) comprises a second compute node (3);
- the second compute node (3) comprises a second automation module (6), which is configured to generate a second automation signal (12) for automating the machine (8);
- the second compute node (3) comprises a first data probe (5);
- the first data probe (5) and the second data probe (7) are configured to communicate by publishing and receiving data according to a publish-subscribe pattern (9);
- the automation system (1) is configured to carry out a first challenge-response program (10) via the publish-subscribe pattern (9), wherein the second data probe (7) acts as a first challenging instance and the first data probe (5) acts as a first responding instance; and
- the automation system (1) is configured to evaluate an integrity of the automation system (1) depending on a result (23) of the first challenge-response program (10).

15. Computer program product comprising instructions, which, when executed by an automation system (1) according to claim 14, cause the automation system (1) to carry out a computer-implemented method according to one of claims 1 to 13.
